# EUROPEAN PATENT SPECIFICATION

(11) **EP 1 531 485 B1**
(45) Date of publication and mention of the grant of the patent: **21.06.2006**
(21) Application number: 04105710.0
(22) Date of filing: 11.11.2004
(51) Int. Cl.: H01H 13/70, G06F 3/02, B41J 5/10

(54) **Adjustable keyboard**
Verstellbare Tastatur
Clavier réglable

(30) Priority: 14.11.2003 CN 200320116760; 17.02.2004 CN 200420003816 U
(43) Date of publication of application: 18.05.2005
(73) Proprietor: Darfon Electronics Corporation, Kweishan Taoyuan 333 (TW)
(72) Inventor: TZENG, Shu-Wen, Jhubei City, Hsinchu County 302, (TW); HUANG, Chun-Chung, Taipei, (TW)
(74) Representative: Patentanwälte Kewitz & Kollegen

(56) References cited:
- DE-A1- 3 913 702
- US-A- 5 375 800
- US-A- 5 732 928
- US-A- 5 764 474

## Description

### BACKGROUND

The invention relates to keyboards, and in particular to keyboards providing adjustment of angle of elevation and height.

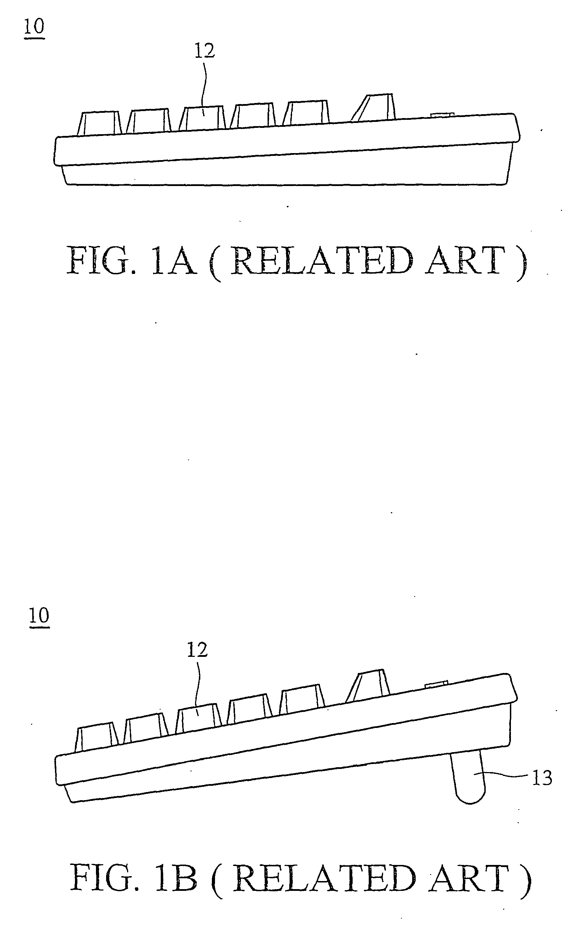

Referring to FIG. 1A, a conventional keyboard 10 comprises a plurality of keys 12. The keyboard 10 can be provided with a predetermined inclined angle for ergonomic operation, providing a proper angle of elevation to the keys 12. Furthermore, as shown in FIG. 1B, when the predetermined inclined angle of the keyboard 10 is insufficient, an extra supporting shaft 13 disposed on the bottom thereof can be pulled out to support the keyboard 10, thereby increasing the inclined angle thereof.

As shown in FIG. 1B, the angle of elevation of the keyboard 10 can be adjusted only by means of the supporting shaft 13. The amount by which the angle of elevation of the keyboard 10 can be adjusted is thus fixed. Moreover, when the angle of elevation of the keyboard 10 is adjusted, the keyboard 10 must be lifted, the supporting shaft 13 must be pulled out from a recess on the bottom thereof and rotated to a predetermined position, creating inconvenience of use.

The US Patent 5,764,474 discloses a notebook computer with a keyboard structure movably supported on the top side of the housing. The keyboard structure is movable relative to the base housing between a forwardly disposed, generally horizontal storage and transport orientation and a rearwardly shifted use orientation in which the keyboard structure is upwardly and rearwardly tilted- When the keyboard structure is rearwardly shifted to its use orientation it uncovers the pointing device for operation by the computer user.

The DE 39 13 702 discloses a hinge for tilting a keyboard within a housing. The hinge extends into an elongated hole at the side face of the keyboard. The keyboard is adjustable in the range of the size of the elongated hole. Furthermore the angle of the hinge can by changed.

The US 5 732 928 discloses a keyboard stand with a base support. The support includes a first wing and a second wing hinged to the first wing. The wings form a triangle, which can be adjusted by apertures laterally defined in the bottom of the keyboard. By changing the angle of the triangle, the angle of the keyboard is changed.

The US 5 375 800 discloses a adjustable keyboard support. A planar keyboard support member variably supported at typically six different angles by a support mechanism typically in the shape of a hinged arm engaging a selected channel or groove. A padded wrist rest, normally hinged to the keyboard support, is independently adjustable to different elevations, by use of an eccentric cam.

Hence, there is a need for keyboards providing simple and fast adjustment of angle of elevation and operational height.

### SUMMARY

An exemplary embodiment of a keyboard comprises a base and a keyboard subassembly disposed thereon, and movable between a first position and a second position. The keyboard subassembly provides a first angle of elevation when in the first position, and a second angle of elevation when in the second position. The first angle of elevation is less than the second angle of elevation.

The keyboard subassembly provides a first operational height when in the first position, and a second operational height when in the second position. The first operational height is smaller than the second operational height.

The base comprises a sliding shaft, and the keyboard subassembly comprises a first sliding groove in which the sliding shaft slides.

The first sliding groove comprises a first end and a second end. The keyboard subassembly is in the first position when the sliding shaft slides to the first end, and the keyboard subassembly is in the second position when the sliding shaft slides to the second end.

The first sliding groove comprises a plurality of positioning springs. The sliding shaft is positioned in different positions in the first sliding groove by means of the positioning springs, respectively.

The keyboard further comprises a push rod movably disposed on the base to move the keyboard subassembly between the first position and the second position.

The keyboard subassembly provides a predetermined curvature.

The base comprises a curved recess providing a curvature corresponding to the predetermined curvature of the keyboard subassembly.

The base comprises a plurality of parallel protruding tracks on the curved recess, and the keyboard subassembly comprises a plurality of parallel second sliding grooves on the bottom thereof. The protruding tracks slide in the second sliding grooves.

### DESCRIPTION OF THE DRAWINGS

The invention can be more fully understood by reading the subsequent detailed description and examples with references made to the accompanying drawings, wherein:
FIG. 1A is a schematic side view of a conventional keyboard in a first operational position;
FIG. 1B is a schematic side view of the keyboard of FIG. 1A in a second operational position, at a higher angle of elevation;
FIG. 2A is a schematic assembly view of an embodiment of a keyboard;
FIG. 2B is a schematic exploded view of FIG. 2A;
FIG. 3A is a schematic side view of a keyboard subassembly of FIG. 2B;
FIG. 3B is a partial enlarged view of FIG. 3A;
FIGs. 4A, 4B, and 4C show different angles of elevation for the keyboard of FIG. 2A;
FIG. 5 is a partial view of the base of an embodiment of a keyboard;
FIG. 6A is a schematic assembly view of an embodiment of a keyboard;
FIG. 6B is a schematic exploded view of FIG. 6A;
FIG. 7A is a schematic side view of a keyboard subassembly of FIG. 6B;
FIG. 7B is a bottom view of FIG. 7A;
FIGs. 8A, 8B, and 8C show different angles of elevation of the keyboard of FIG. 6A; and
FIG. 9 is a schematic perspective view of the base of an embodiment of a keyboard.

### DETAILED DESCRIPTION

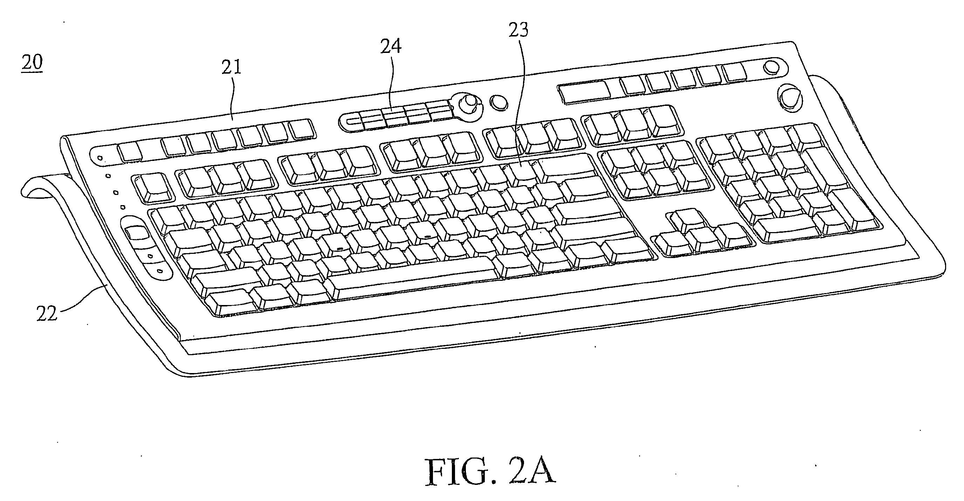

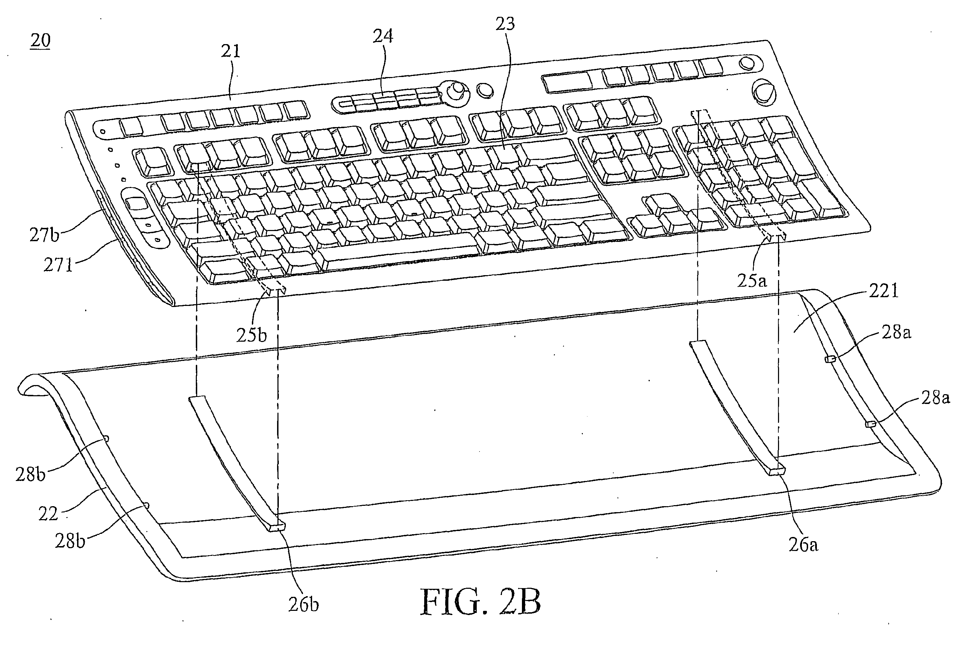

Referring to FIG. 2A and FIG. 2B, a keyboard 20 comprises a base 22 and a keyboard subassembly 21. The keyboard subassembly 21 provides a predetermined curvature and comprises multiple keys 23 and function keys 24 disposed on the curved surface thereof, providing ergonomic function. The base 22 is curved and comprises a curved recess 221 on the curved and top surface thereof. The curved recess 221 provides a curvature and width corresponding to those of the keyboard subassembly 21, such that the keyboard subassembly 21 can slide forward and backward in the curved recess 221.

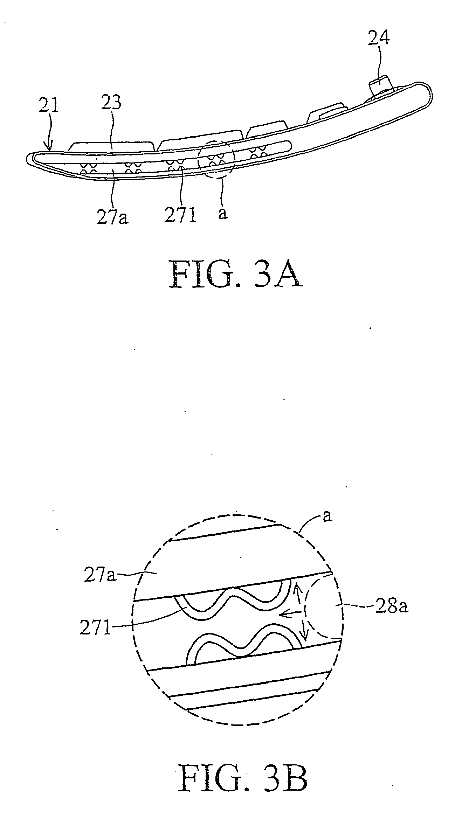

The base 22 comprises a plurality of sliding shafts 28a and 28b respectively disposed on opposite sides thereof. The keyboard subassembly 21 comprises two first sliding grooves 27a (as shown in FIG. 3A) and 27b respectively formed on opposite sides thereof. When the keyboard subassembly 21 is disposed on the base 22, the sliding shafts 28a and 28b respectively correspond to the first sliding grooves 27a and 27b. Accordingly, the sliding shafts 28a and 28b can respectively slide in the first sliding grooves 27a and 27b. Moreover, the base 22 comprises two parallel protruding tracks 26a and 26b on the curved recess 221, and the keyboard subassembly 21 comprises two parallel second sliding grooves 25a and 25b on the bottom thereof. The protruding tracks 26a and 26b correspond to and slide in the second sliding grooves 25a and 25b, respectively. Thus, the keyboard subassembly 21 can slide between a first position and a second position on the base 22. Specifically, the keyboard subassembly 21 provides a first angle of elevation and a first operational height when in the first position on the base 22. The keyboard subassembly 21 provides a second angle of elevation and a second operational height when in the second position on the base 22. The first and second angles of elevation are respectively the minimum and maximum angles of elevation, and the first and second operational heights are the minimum and maximum operational heights.

Referring to FIG. 3A and FIG. 3B, a plurality of positioning springs 271 are respectively disposed in the first sliding grooves 27a and 27b (not shown in FIG. 3A and FIG. 3B). When the keyboard subassembly 21 is pushed, the sliding shafts 28a and 28b respectively slide in the first sliding grooves 27a and 27b and compress the positioning springs 271. The sliding shafts 28a and 28b can take different positions in the first sliding grooves 27a and 27b by way of the positioning springs 271. Thus, different angles of elevation and operational heights are provided.

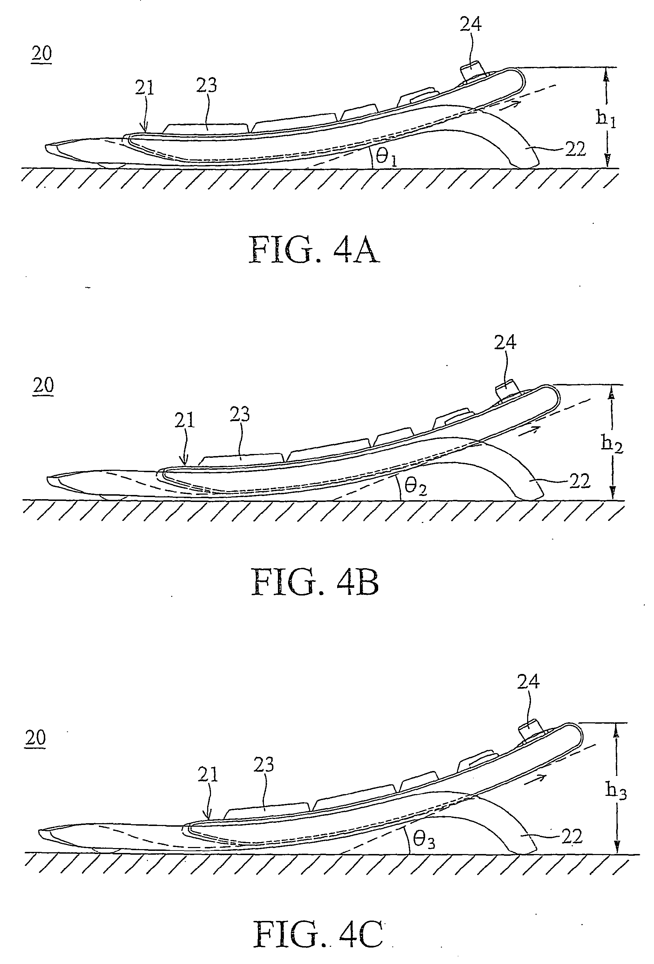

FIGs. 4A, 4B, and 4C show three different angles of elevation of the keyboard 20, although the keyboard 20 is not limited to only these three angles of elevation.

As shown in FIG. 3A and FIG. 4A, when the keyboard subassembly 21 is in the first position (on the base 22), the sliding shafts 28a and 28b are respectively positioned at one end of the first sliding grooves 27a and 27b by engaging the positioning springs 271. At this point, the keyboard 20 provides a minimum angle of elevation θ₁ and a minimum operational height h₁.

As shown in FIG. 4B, when the angle of elevation of the keyboard 20 is adjusted, the keyboard subassembly 21 can be pushed forward. The sliding shafts 28a and 28b then disengage from the positioning springs 271 and slide in the first sliding grooves 27a and 27b. The sliding shafts 28a and 28b again engage the next positioning springs 271. At this point, the keyboard 20 provides an intermediate angle of elevation θ₂ and an intermediate operational height h₂.

As shown in FIG. 4C, when the keyboard subassembly 21 is again pushed forward to the second position, the sliding shafts 28a and 28b slide in the first sliding grooves 27a and 27b and engage the next positioning springs 271. At this point, the keyboard 20 provides a maximum angle of elevation θ₃ and a maximum operational height h₃.

The first sliding grooves 27a and 27b and sliding shafts 28a and 28b can be alternatively positioned. Namely, the first sliding grooves 27a and 27b can be disposed on opposite sides of the base 22, and the sliding shafts 28a and 28b can be disposed on opposite sides of the keyboard subassembly 21. Accordingly, the keyboard subassembly 21 can also slide or move on the base 22. Similarly, the second sliding grooves 25a and 25b and protruding tracks 26a and 26b can be alternatively positioned to provide the same positioning effect. Furthermore, one of the first sliding grooves 27a and 27b and one of the sliding shafts 28a and 28b can be omitted while providing the same effect. Similarly, one of the second sliding grooves 25a and 25b and one of the protruding tracks 26a and 26b can be omitted to provide the same positioning effect.

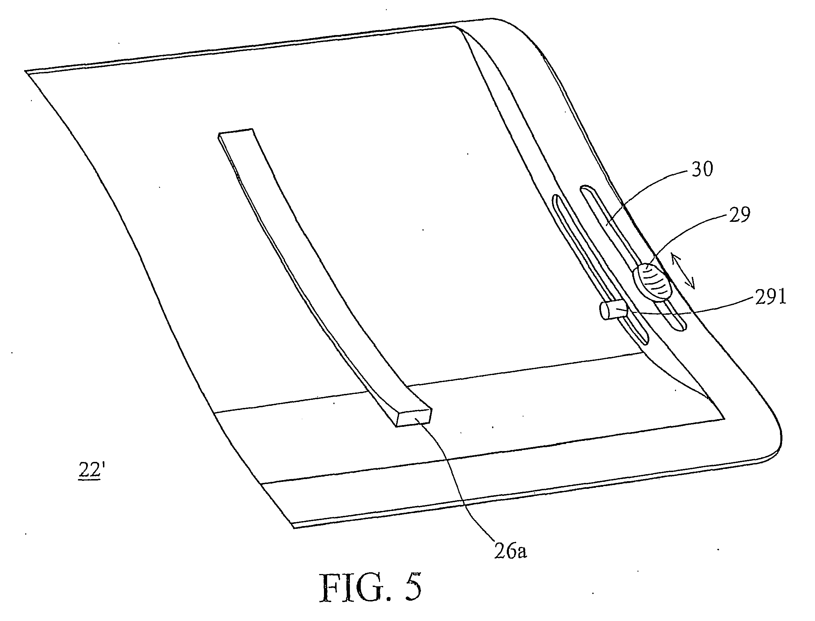

Alternatively, as shown in FIG. 5, a base 22' can comprise two third sliding grooves 30 on opposite sides of the base 22', and two push rods 29 in the third sliding grooves 30, sliding therein. Additionally, each push rod 29 can be positioned in each third sliding groove 30 by means of a spring (not shown).

Each push rod 29 comprises a sliding shaft 291 engaging the keyboard subassembly 21. When the angle of elevation (or operational height) of the keyboard is adjusted, the push rods 29 are contacted, such that the sliding shafts 291 connected thereto move the keyboard subassembly 21 between the first position and the second position on the base 22'. The results of movement of the keyboard subassembly 21 are shown in FIGs. 4A, 4B, and 4C.

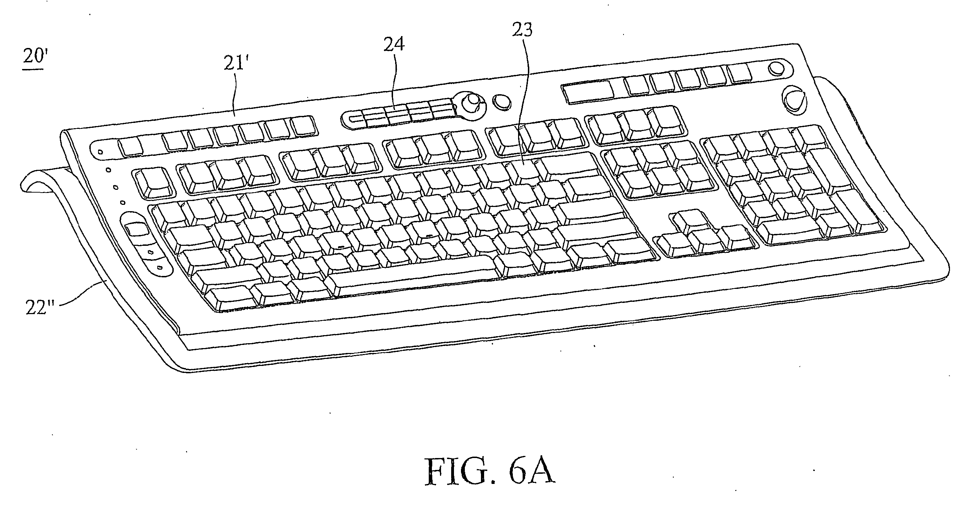

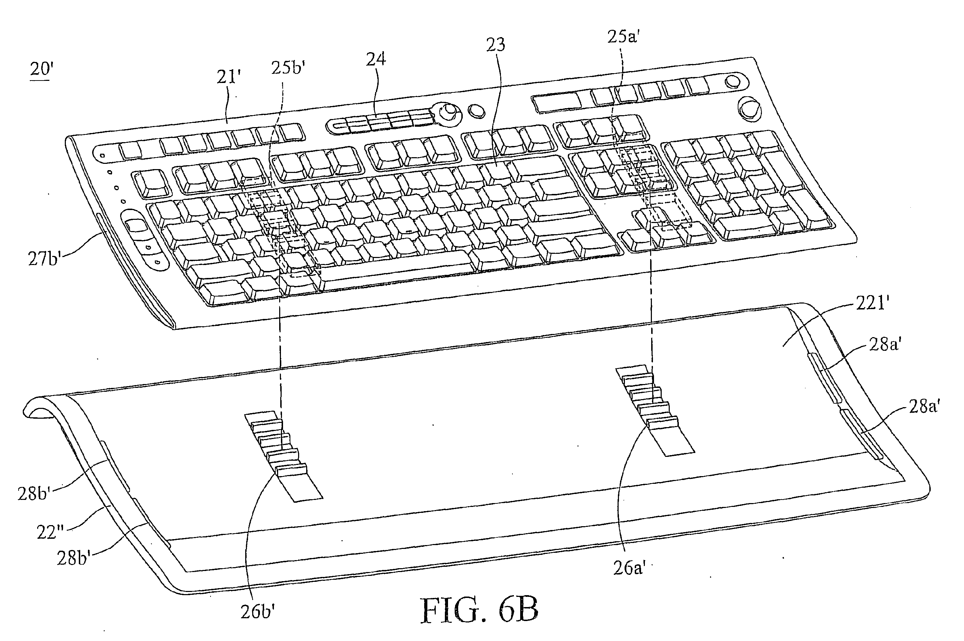

Further, as shown in FIG. 6A and FIG. 6B, a keyboard 20' can comprise a base 22" and a keyboard subassembly 21', providing a predetermined curvature and multiple keys 23 and function keys 24 disposed on the curved and top surface thereof, providing ergonomic function. The base 22" is curved and comprises a curved recess 221' on the top surface thereof, with a curvature and width corresponding to those of the keyboard subassembly 21', such that the keyboard subassembly 21' can slide in the curved recess 221'.

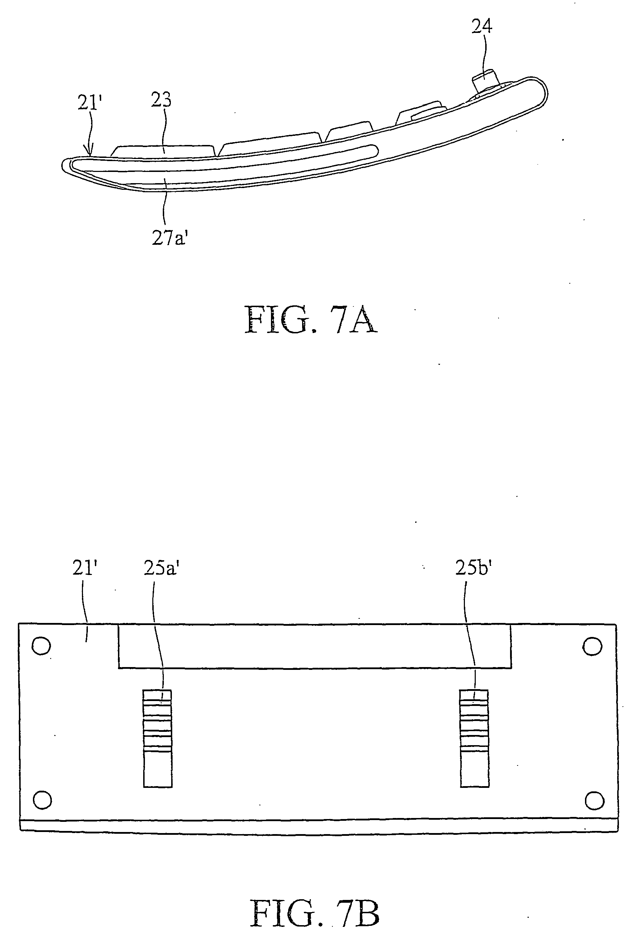

The base 22" comprises a plurality of protruding ribs 28a' and 28b' respectively disposed on opposite sides thereof. The keyboard subassembly 21' comprises two curved sliding grooves 27a' (as shown in FIG. 7A) and 27b' respectively formed on opposite sides thereof. When the keyboard subassembly 21' is disposed on the base 22", the protruding ribs 28a' and 28b' respectively correspond to the sliding grooves 27a' and 27b', sliding therein. Thus, the keyboard subassembly 21' of the keyboard 20' can slide on the base 22" and provide different angles of elevation and operational heights.

As shown in FIG. 6B and FIG. 7A, the protruding ribs 28a' and 28b' provide a curvature corresponding to that of the sliding grooves 27a' and 27b', such that the protruding ribs 28a' and 28b' can slide in the sliding grooves 27a' and 27b' and the keyboard subassembly 21' can thereby be positioned on the base 22''. Additionally, one end of each sliding groove 27a' and one end of each sliding groove 27b' are open, such that the keyboard subassembly 21' can be removed from the base 22''.

As shown in FIG. 6B and FIG. 7B, the base 22" comprises two parallel arrays of protrusions 26a' and 26b' on the curved recess 221', and the keyboard subassembly 21' comprises two parallel arrays of recesses 25a' and 25b' on the bottom thereof. The positions of the protrusions 26a' and 26b' correspond to those of recesses 25a' and 25b', respectively. The protrusions 26a' and 26b', of rubber, interfere with the recesses 25a' and 25b' to generate positive interval response when the keyboard subassembly 21' is disposed on and slides on the base 22''. When the keyboard subassembly 21' slides on the base 22'', different angles of elevation and operational heights are thereby provided.

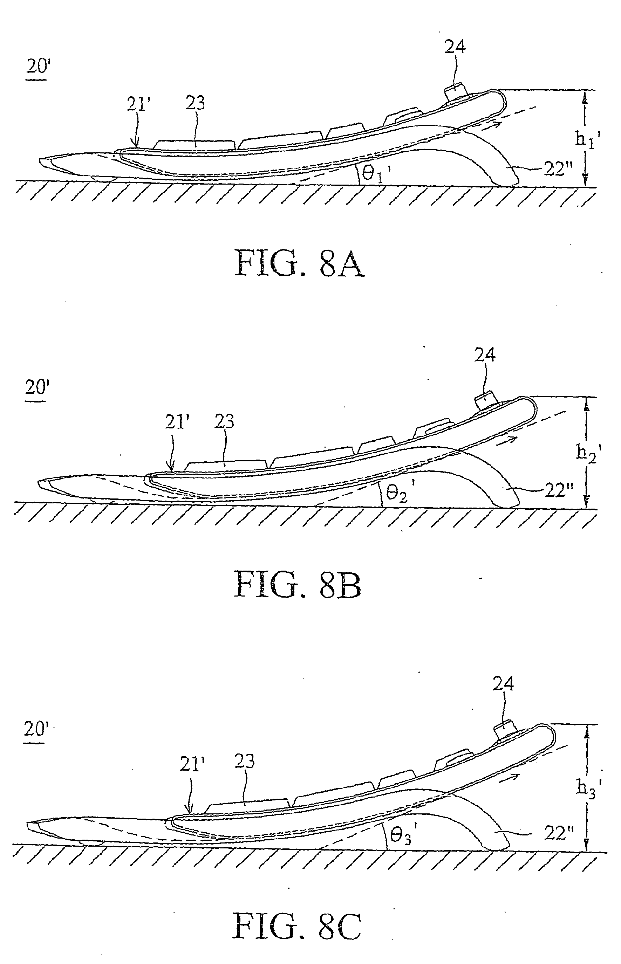

FIGs. 8A, 8B, and 8C show three different angles of elevation of the keyboard 20', although the keyboard 20' is not limited thereto.

As shown in FIG. 7A and FIG. 8A, when the keyboard subassembly 21' is in a first position (on the base 22"), the protruding ribs 28a' and 28b' are respectively positioned in one end of the curved sliding grooves 27a' and one end of the curved sliding grooves 27b'. At this point, the keyboard 20' provides a minimum angle of elevation θ₁' and a minimum operational height h₁'.

As shown in FIG. 8B, when the angle of elevation of the keyboard 20' is adjusted, the keyboard subassembly 21' can be pushed forward. The protruding ribs 28a' and 28b' then slide in the curved sliding grooves 27a' and 27b'. The protrusions 26a' and 26b' interfere with the recesses 25a' and 25b', advancing the keyboard subassembly 21' at an interval. At this point, the keyboard 20' provides an intermediate angle of elevation θ₂' and an intermediate operational height h₂'.

As shown in FIG. SC, when the keyboard subassembly 21' is pushed further forward to a second position, the protruding ribs 28a' and 28b' slide in the curved sliding grooves 27a' and 27b' and the rubber protrusions 26a' and 26b' of the base 22" interfere with the next recesses 25a' and 25b'. At this point, the keyboard 20' provides a maximum angle of elevation θ₃' and a maximum operational height h₃'.

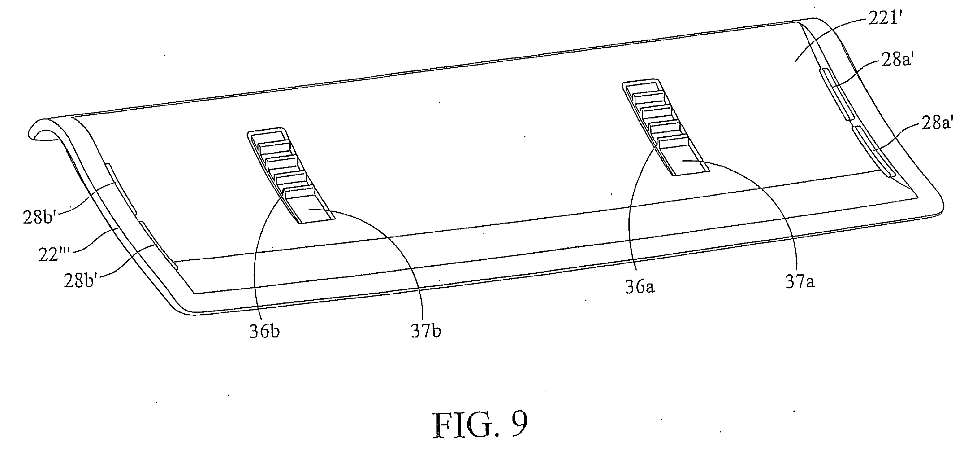

As well, as shown in FIG. 9, a base 22''' can comprise two resilient arms 37a and 37b integrally formed therein. Two arrays of protrusions 36a and 36b are respectively disposed on the resilient arms 37a and 37b. When the protrusions 36a and 36b interfere with the recesses 25a' and 25b' of the keyboard subassembly 21', the protrusions 36a and 36b are moved downward by the resilient arms 37a and 37b. Positive interval response is thus generated when the keyboard subassembly 21' slides on the base 22"'. Additionally, when the keyboard subassembly 21' slides on the base 22"', different angles of elevation and operational heights are thereby provided.

Moreover, the curved sliding grooves 27a' and 27b' and protruding ribs 28a' and 28b' can be alternatively positioned. Namely, the curved sliding grooves 27a' and 27b' can be disposed on opposite sides of the base 22" (base 22''') while the protruding ribs 28a' and 28b' can be disposed on opposite sides of the keyboard subassembly 21'. Accordingly, the keyboard subassembly 21' can also slide or move on the base 22'' (base 22'''). Similarly, the recesses 25a' and 25b' on the bottom of the keyboard subassembly 21' and protrusions 26a' and 26b' (protrusions 36a and 36b) disposed on the curved recess 221' can be alternatively positioned to provide the same positioning effect.

In conclusion, embodiments of a keyboard provide a detachable and curved keyboard subassembly and base. The angle of elevation and operational height of the keyboard can be quickly adjusted by simply pushing the keyboard subassembly, and the disclosure may thereby enhance convenience of operation, complying with different operational requirements.

## Claims

1. A keyboard (20), comprising:
a base (22) comprising two sliding shaft (28a, 28b); and
a keyboard subassembly (21) disposed on the base and moving between a first position and a second position, wherein the keyboard subassembly comprises two first sliding grooves (27a, 27b) in which the sliding shafts slide, the keyboard subassembly provides a first angle of elevation when in the first position, and a second angle of elevation when in the second position, and the first angle of elevation is less than the second angle of elevation, **characterized in that** the first sliding grooves comprise a plurality of positioning springs (271) disposed therein, the sliding shafts achieve different positions in the first sliding grooves by means of the positioning springs, respectively.

2. The keyboard as claimed in claim 1, wherein the keyboard subassembly provides a first operational height when in the first position, and a second operational height when in the second position, and the first operational height is smaller than the second operational height.

3. The keyboard as claimed in claim 1, wherein the first sliding grooves further comprise a first end and a second end, such that the keyboard subassembly is in the first position when the sliding shafts slide to the first end, and in the second position when the sliding shafts slide to the second end.

4. The keyboard as claimed in one or more claims 1 to 3, further comprising a push rod (29) movably disposed on the base, moving the keyboard subassembly between the first position and the second position.

5. The keyboard as claimed in one or more claims 1 to 4, wherein the keyboard subassembly provides a predetermined curvature.

6. The keyboard as claimed in claim 5, wherein the base further comprises a curved recess providing a curvature corresponding to the predetermined curvature of the keyboard subassembly.

7. The keyboard as claimed in claim 6, wherein the base further comprises a plurality of parallel protruding tracks (26a, 26b) on the curved recess, the keyboard subassembly further comprises a plurality of parallel second sliding grooves (25a, 25b) on the bottom thereof, and the protruding tracks slide in the second sliding grooves.

8. A keyboard, comprising:
a base (22'''), with a plurality of protrusions (36a, 36b); two resilient arms (37a, 37b) on which the protrusions are disposed; and
a keyboard subassembly (21') disposed on the base and moving between a plurality of positions, **characterized in that** said the keyboard subassembly comprises a plurality of recesses (25a', 25b'), wherein the recesses receive the protrusions to enable movement of the keyboard subassembly among
said plurality of positions on the base, and the keyboard subassembly provides different angles of elevation when in the positions.

9. The keyboard as claimed in claim 8, wherein the keyboard subassembly provides a first operational height when in a first position on the base, and a second operational height when in a second position on the base, and the first operational height is smaller than the second operational height.

10. The keyboard as claimed in claim 8 or 9, wherein the base further comprises two protruding ribs (28a', 28b'), and the keyboard subassembly further comprises two sliding grooves (27a', 27b') in which the protruding ribs slide.

11. The keyboard as claimed in one or more claims 8 to 10, wherein the protrusions are parallel to the recesses.

12. The keyboard as claimed in one or more claims 8 to 11, wherein the protrusions comprise a resilient material.

13. The keyboard as claimed in one or more claims 8 to 12, wherein the protrusions comprise rubber.

14. The keyboard as claimed in claim in one or more claims 8 to 13, wherein the keyboard subassembly provides a predetermined curvature.

15. The keyboard as claimed in claim 14, wherein the base further comprises a curved recess (221') providing a curvature corresponding to the predetermined curvature of the keyboard subassembly.

16. The keyboard as claimed in claim 8, wherein the resilient arm is formed integrally with the base.

## Patentansprüche

1. Eine Tastatur (20) umfassend:
eine Basis (22) umfassend zwei Gleitschafte (28a, 28b) und
eine Tastatur-Unterbaugruppe (21) angeordnet auf der Basis und bewegbar zwischen einer ersten Position und einer zweiten Position, die Tastatur-Unterbaugruppe umfasst zwei erste Gleitrillen (27a, 27b), in denen die Gleitschafte gleiten, die Tastatur-Unterbaugruppe stellt einen ersten Winkel einer Anhebung bereit, wenn es sich in der ersten Position befindet, und einen zweiten Winkel einer Anhebung, wenn es sich in der zweiten Position befindet, und der erste Winkel der Anhebung ist geringer als der zweite Winkel der Anhebung, **dadurch gekennzeichnet, dass** die ersten Gleitrillen eine Vielzahl von Positionierungsfedern (271) aufweisen, die darin angeordnet sind, die Gleitschafte erlangen ihre unterschiedliche Position in ersten Gleitrillen durch Einwirkung der entsprechenden Positionierungsfedern.

2. Die Tastatur nach Anspruch 1, wobei die Tastatur-Unterbaugruppe eine erste Arbeitshöhe aufweist, wenn sie sich in der ersten Position befindet, und eine zweite Arbeitshöhe, wenn sie sich in der zweiten Position befindet, wobei die erste Arbeitshöhe geringer ist, als die zweite Arbeitshöhe.

3. Die Tastatur gemäß Anspruch 1, wobei die Gleitrillen weiterhin umfassen, ein erstes Ende und ein zweites Ende, so dass die Tastatur-Unterbaugruppe sich in der ersten Position befindet, wenn die Gleitschafte zum ersten Ende gleiten und in der zweiten Position, wenn die Gleitschafte zum zweiten Ende gleiten.

4. Die Tastatur gemäß einem oder mehreren der Ansprüche 1 bis 3, weiterhin umfassend einen Schiebestabe (29), der beweglich an der Basis angeordnet ist, der die Tastatur-Unterbaugruppe zwischen der ersten und der zweiten Position bewegt.

5. Die Tastatur nach einem oder mehreren der Ansprüche 1 bis 4, wobei die Tastatur-Unterbaugruppe in vobestimmter Weise gebogen ist.

6. Die Tastatur nach Anspruch 5, wobei die Basis weiterhin eine bogenförmige Aussparung umfasst, die einem Bogen entsprechend dem vorbestimmten Bogen der Tastatur-Unterbaugruppe bereitstellt.

7. Die Tastatur gemäß Anspruch 6, wobei die Basis weiterhin eine Mehrzahl von parallel hervorstehenden Schienen (26a, 26b) auf den gebogenen Aussparungen umfasst, die Tastatur-Unterbaugruppe umfasst weiterhin eine Vielzahl von parallelen zweiten Gleitrillen (25a, 25b) im Bodenbereich davon und die hervorstehenden Schienen gleiten in den zweiten Gleitrillen.

8. Eine Tastatur umfassend:
eine Basis (22"') mit einer Vielzahl von Vorsprüngen (36a, 36b); zwei elastische Arme (37a, 37b) an denen die Vorsprünge ausgebildet sind; und
eine Tastatur-Unterbaugruppe (21'), die an der Basis ausgebildet ist und zwischen einer Vielzahl von Positionen beweglich ist, **dadurch gekennzeichnet, dass** die besagte Tastatur-Unterbaugruppe eine Vielzahl von Aussparungen (25a', 25b') aufweist, wobei die Aussparungen die Vorsprünge aufnehmen, um eine Bewegung der Tastatur- Unterbaugruppe inerhalb einer Vielzahl von Positionen auf der Basis zu ermöglichen und die Tastatur- Unterbaugruppe stellt unterschiedliche Winkel von Anstellungen, wenn sie in den Positionen ist, bereit.

9. Die Tastatur nach Anspruch 8, wobei die Tastatur-Unterbaugruppe eine erste Arbeitshöhe bereitstellt, wenn sie in einer ersten Position auf der Basis ausgerichtet ist und eine zweite Arbeitshöhe, wenn sie in der zweiten Position auf der Basis ist, wobei die erste Arbeitshöhe geringer als die zweite Arbeitshöhe ist.

10. Die Tastatur nach Anspruch 8 oder 9, wobei die Basis weiterhin umfasst, zwei vorspringende Rippen (28a', 28b') und die Tastatur- Unterbaugruppe umfasst zwei Gleitrillen (27a', 27b'), in denen die vorspringenden Rippen gleiten.

11. Die Tastatur gemäß einem oder mehreren der Ansprüche 8 bis 10, wobei die Vorsprünge parallel zu den Aussparungen angeordnet sind.

12. Die Tastatur nach einem oder mehreren der Ansprüche 8 bis 11, wobei die Aussparungen federnde Materialien aufweisen

13. Die Tastatur nach einem oder mehreren der Ansprüche 8 bis 12, wobei die Vorsprünge Gummi umfassen.

14. Die Tastatur nach einem oder mehreren der Ansprüche 8 bis 13, wobei die Tastatur-Unterbaugruppe eine vorbestimmte Biegung aufweist.

15. Die Tastatur nach Anspruch 14, wobei die Basis weiter umfasst, eine gebogene Aussparung (221'), die eine Biegung aufweist, die mit der vorbestimmten Biegung der Tastatur-Unterbaugruppe übereinstimmt.

16. Die Tastatur gemäß Anspruch 8, wobei der federnde Arm integral mit der Basis ausgebildet ist.

## Revendications

1. Clavier (20), comprenant :
une base (22) comprenant deux tiges coulissantes (28a, 28b) ; et
un sous-ensemble de clavier (21) disposé sur la base et se déplaçant entre une première position et une seconde position, le sous-ensemble de clavier comprenant deux premières rainures coulissantes (27a, 27b) dans lesquelles coulissent les deux tiges coulissantes, le sous-ensemble de clavier fournissant un premier angle d'élévation lorsqu'il se trouve dans la première position, et un second angle d'élévation lorsqu'il se trouve dans la seconde position, et le premier angle d'élévation étant inférieur au second angle d'élévation,
**caractérisé en ce que** les premières rainures coulissantes comprennent une pluralité de ressorts de positionnement (271) disposés dans celles-ci, les tiges coulissantes se plaçant dans différentes positions dans les premières rainures coulissantes grâce aux ressorts de positionnement, respectivement.

2. Clavier selon la revendication 1, dans lequel le sous-ensemble de clavier fournit une première hauteur fonctionnelle lorsqu'il se trouve dans la première position, et une seconde hauteur fonctionnelle lorsqu'il se trouve dans la seconde position, et la première hauteur fonctionnelle est plus petite que la seconde hauteur fonctionnelle.

3. Clavier selon la revendication 1, dans lequel les premières rainures coulissantes comprennent en outre une première extrémité et une seconde extrémité de telle sorte que le sous-ensemble de clavier se trouve dans la première position lorsque les tiges coulissantes coulissent vers la première extrémité, et dans la seconde position lorsque les tiges coulissantes coulissent vers la seconde extrémité.

4. Clavier selon une ou plusieurs des revendications 1 à 3, comprenant en outre une tige de poussée (29) disposée de manière mobile sur la base, déplaçant le sous-ensemble de clavier entre la première position et la seconde position.

5. Clavier selon une ou plusieurs des revendications 1 à 4, dans lequel le sous-ensemble de clavier présente une courbure prédéterminée.

6. Clavier selon la revendication 5, dans lequel la base comprend en outre un renfoncement incurvé présentant une courbure qui correspond à la courbure prédéterminée du sous-ensemble de clavier.

7. Clavier selon la revendication 6, dans lequel la base comprend en outre une pluralité de rails saillants parallèles (26a, 26b) sur le renfoncement incurvé, le sous-ensemble de clavier comprenant en outre une pluralité de secondes rainures coulissantes parallèles (25a, 25b) sur sa partie inférieure, et les rails saillants coulissant dans les secondes rainures coulissantes.

8. Clavier, comprenant :
une base (22"') avec une pluralité de saillies (36a, 36b) ; deux bras souples (37a, 37b) sur lesquels les saillies sont disposées ; et un sous-ensemble de clavier (21') disposé sur la base et se déplaçant entre une pluralité de positions, **caractérisé en ce que** ledit sous-ensemble de clavier comprend une pluralité de renfoncements (25a', 25b'), dans lequel les renfoncements reçoivent les saillies pour permettre le mouvement du sous-ensemble de clavier parmi ladite pluralité de positions sur la base, et le sous-ensemble de clavier fournit des angles d'élévation différents lorsqu'il se trouve dans les positions.

9. Clavier selon la revendication 8, dans lequel le sous-ensemble de clavier fournit une première hauteur fonctionnelle lorsqu'il se trouve dans une première position sur la base, et une seconde hauteur fonctionnelle lorsqu'il se trouve dans une seconde position sur la base, et la première hauteur fonctionnelle est plus petite que la seconde hauteur fonctionnelle.

10. Clavier selon la revendication 8 ou 9, dans lequel la base comprend en outre deux nervures saillantes (28a', 28b') et le sous-ensemble de clavier comprend en outre deux rainures coulissantes (27a', 27b') dans lesquelles les nervures saillantes coulissent.

11. Clavier selon une ou plusieurs des revendications 8 à 10, dans lequel les saillies sont parallèles aux renfoncements.

12. Clavier selon une ou plusieurs des revendications 8 à 11, dans lequel les saillies comprennent un matériau souple.

13. Clavier selon une ou plusieurs des revendications 8 à 12, dans lequel les saillies comprennent du caoutchouc.

14. Clavier selon une ou plusieurs des revendications 8 à 13, dans lequel le sous-ensemble de clavier présente une courbure prédéterminée.

15. Clavier selon la revendication 14, dans lequel la base comprend en outre un renfoncement incurvé (221') présentant une courbure qui correspond à la courbure prédéterminée du sous-ensemble de clavier.

16. Clavier selon la revendication 8, dans lequel le bras souple est formé d'un seul tenant avec la base.
